Europäisches Patentamt

(19) European Patent Office

Office européen des brevets

(11) Numéro de publication: **0 029 627**
**B1**

(12) **FASCICULE DE BREVET EUROPEEN**

(45) Date de publication du fascicule du brevet:
20.07.83

(21) Numéro de dépôt: **80201081.9**

(22) Date de dépôt: **13.11.80**

(51) Int. Cl.³: **H 04 Q 3/00, H 04 M 19/02**

(54) **Dispositif de détection du bouclage d'une ligne d'abonné pendant la sonnerie.**

(30) Priorité: **21.11.79 FR 7928722**

(43) Date de publication de la demande:
**03.06.81 Bulletin 81/22**

(45) Mention de la délivrance du brevet:
**20.07.83 Bulletin 83/29**

(84) Etats contractants désignés:
**BE CH DE FR GB LI SE**

(56) Documents cités:
**CH-A-526 893**
**DE-B-2 359 867**
**US-A-3 321 583**
**US-A-3 746 798**
**US-A-3 838 223**

(73) Titulaire: **TELECOMMUNICATIONS
RADIOELECTRIQUES ET TELEPHONIQUES T.R.T.,**
**88, rue Brillat Savarin, F-75013 Paris (FR)**

(72) Inventeur: **Ferrieu, Gilbert, Marie, Marcel, SOCIETE
CIVILE "S.P.I.D." 209, rue de l'Université, F-75007 Paris
(FR)**
Inventeur: **Osmond, Etienne, Jules, Raymond, SOCIETE
CIVILE "S.P.I.D." 209, rue de l'Université, F-75007 Paris
(FR)**
Inventeur: **Hetet, Yves, Jean, François, SOCIETE CIVILE
"S.P.I.D." 209, rue l'Université, F-75007 Paris (FR)**

(74) Mandataire: **Tissot, Jean et al, Société Civile
S.P.I.D. 209, rue de l'Université, F-75007 Paris (FR)**

Dispositif de détection du bouclage d'une ligne d'abonné pendant la sonnerie

L'invention concerne un dispositif de détection du bouclage d'une ligne téléphonique d'abonné pendant la durée de la sonnerie, cette ligne étant alimentée pendant cette durée par la tension alternative de sonnerie et une tension continue.

On sait que, dans les installations téléphoniques, il existe, dans les circuits d'interface entre le central et les lignes d'abonné, des dispositifs chargés de détecter le décrochage du combiné dans les postes téléphoniques connectés à ces lignes d'abonné. Ce décrochage produit un bouclage de la ligne d'abonné et ce bouclage peut se détecter en vérifiant qu'une tension continue appliquée à la ligne d'abonné y fait circuler un courant continu lors du bouclage. Le bouclage de la ligne d'abonné est relativement aisé à détecter lorsque la ligne d'abonné ne reçoit qu'une tension continue. Par contre, lorsque la ligne d'abonné reçoit, superposée à cette tension continue, la tension alternative de sonnerie, la détection du courant continu de bouclage pose quelques problèmes, du fait notamment de la fréquence faible (par exemple 50 Hz) de la tension de sonnerie et du courant relativement élevé que cette tension (par exemple 70 $V_{eff.}$) engendre dans la ligne d'abonné, lors du bouclage. On doit noter également qu'un dispositif de détection de bouclage doit fonctionner correctement, en présence de courants parasites dans la ligne d'abonné, tels que des courants longitudinaux ou des courants de fuite entre les deux fils de ligne.

Les dispositifs de détection de bouclage traditionnels sont construits à partir de relais chargés de détecter le courant continu de bouclage, tout en étant insensibles au courant alternatif de sonnerie. Ces relais sont relativement encombrants, onéreux, difficiles à régler et peu compatibles avec les équipements électroniques modernes.

Dans des dispositifs connus plus modernes, du genre décrit dans les brevets des USA Nos 3321583 et 3746798, on utilise un condensateur qui est chargé pendant les alternances positives du courant dans la ligne d'abonné et déchargé pendant les alternances négatives, le bouclage de la ligne d'abonné provoquant une modification de la tension moyenne aux bornes du condensateur, qui est utilisée comme critère de détection du bouclage. Mais ces dispositifs ont l'inconvénient d'être assez sensibles à l'amplitude du courant de sonnerie dans la ligne d'abonné et donc à l'amplitude de la tension de sonnerie appliquée à la ligne et à l'impédance de cette ligne.

D'autre part, dans le brevet suisse No 526893, est décrit un dispositif où sont comparés les intervalles de temps pendant lesquels le courant dans la ligne d'abonné est supérieur et inférieur à un certain seuil. De cette comparaison, on peut déduire si le courant dans la ligne d'abonné, qui varie à la fréquence de la tension de sonnerie, comporte ou non un courant continu de bouclage. Ce dispositif, relativement compliqué, a en outre l'inconvénient d'être assez sensible aux caractéristiques de fréquence et d'amplitude du courant de sonnerie et aux divers courants parasites dans la ligne d'abonné.

La présente invention a pour but de fournir un nouveau dispositif de détection du bouclage d'une ligne d'abonné pendant la sonnerie, ce dispositif restant simple et évitant les inconvénients des dispositifs connus.

Conformément à l'invention, ce dispositif de détection de bouclage comporte des moyens pour former une tension représentative de la valeur absolue du courant dans la ligne d'abonné, cette tension étant appliquée, *via* un élément unidirectionnel, à un condensateur shunté par une impédance de façon que, avant le bouclage de la ligne d'abonné, le condensateur se charge jusqu'à la valeur de crête de ladite tension à chaque demi-période de la tension alternative de sonnerie, la constante de temps de décharge du condensateur étant déterminée de façon que, après le bouclage de la ligne d'abonné, la baisse de tension aux bornes du condensateur n'atteigne pas, pendant une durée de décharge égale à une demi-période de la tension alternative de sonnerie, la différence entre deux valeurs crêtes successives de ladite tension représentative de la valeur absolue du courant dans la ligne d'abonné, la détection du bouclage de la ligne d'abonné étant réalisée en détectant le changement que produit ce bouclage dans la période ou l'espacement des impulsions de courant de charge du condensateur.

Avec ce dispositif, la période des impulsions de courant de charge du condensateur est égale à T ou T/2 selon que la ligne d'abonné est bouclée ou non bouclée, de sorte qu'il est très simple de détecter le bouclage de la ligne d'abonné en mesurant un temps correspondant à l'intervalle entre ces impulsions ou à la période de ces impulsions et en détectant que ce temps dépasse un certain seuil.

La description suivante, en regard des dessins annexés, le tout donné à titre d'exemple, fera bien comprendre comment l'invention peut être réalisée.

La fig. 1 représente un schéma du dispositif de l'invention.

La fig. 2 représente des diagrammes montrant divers signaux dans le dispositif de la fig. 1 et destinés à en illustrer le fonctionnement.

La fig. 3 représente un schéma d'une variante du dispositif de l'invention.

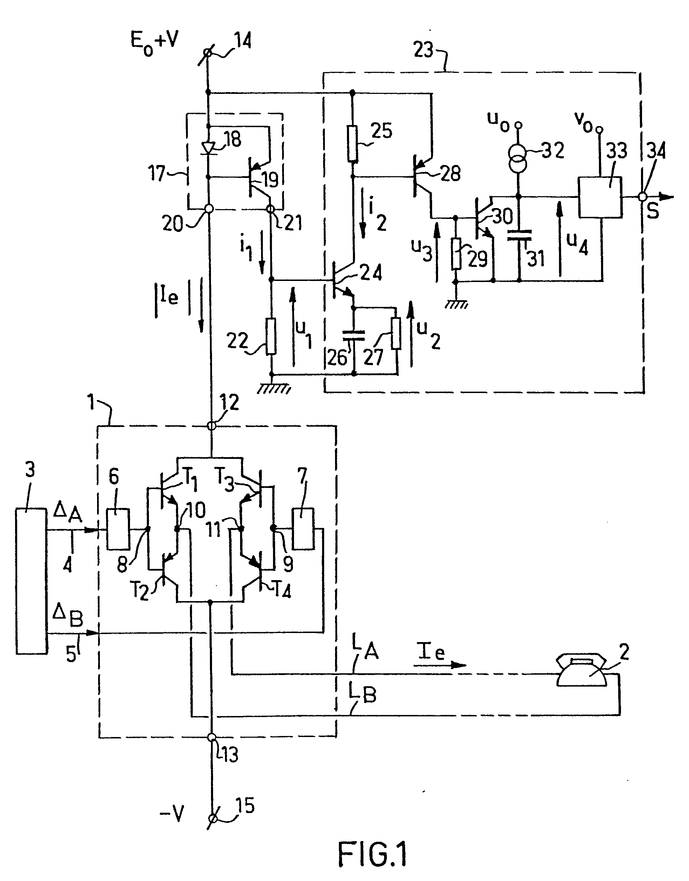

Sur la fig. 1, on a représenté le dispositif de l'invention associé à un joncteur d'abonné 1 qui est destiné notamment à alimenter un poste d'abonné 2 à travers les deux fils $L_A$ et $L_B$ d'une ligne d'abonné. Quand l'abonné est appelé, à partir d'un ordre fourni par le central 3, le joncteur 1 applique entre les deux fils $L_A$ et $L_B$ des trains de tension alternative ayant par exemple une valeur d'environ 70 $V_{eff.}$ et une fréquence de 50 Hz, et servant à exciter la sonnerie du poste.

Lorsque l'abonné appelé décroche le combiné, il se produit un bouclage de la ligne d'abonné et, afin de pouvoir détecter ce bouclage pendant les trains de tension de sonnerie, il est classique d'appliquer à la ligne d'abonné, en même temps que la tension de sonnerie, une tension continue qui ne produit une circulation de courant continu dans la ligne d'abonné que lorsque cette ligne est bouclée par le décrochage du combiné.

L'alimentation de la ligne d'abonné par la tension alternative de sonnerie à laquelle est superposée une tension continue peut être effectuée de diverses manières connues en soi: un moyen traditionnel est d'utiliser un transformateur dont l'enroulement primaire est alimenté par une tension à la fréquence

$$f = \frac{\omega}{2\pi}$$

de la tension de sonnerie et dont les deux enroulements secondaires produisant des tensions d'amplitude V sont connectés, d'un côté, respectivement aux fils de ligne $L_A$ et $L_B$ et, de l'autre côté, à la masse, toutefois à travers une source de tension continue $E_o$ pour l'un de ces enroulements secondaires. On peut obtenir, de cette manière, que les tensions $V_A$ et $V_B$ appliquées sur les deux fils de ligne $L_A$ et $L_B$ soient, au moment de la sonnerie:

$$\begin{cases} V_A = E_o + V \sin \omega t \\ V_B = - V \sin \omega t \end{cases}$$

Il en résulte que la tension $U_S = V_A - V_B$ appliquée au moment de la sonnerie entre les deux fils de ligne $L_A$ et $L_B$ est égale à

$$U_s = E_o + 2V \sin \omega t \qquad (2)$$

Cette tension comporte une composante continue d'amplitude $E_o$ égale par exemple à 12 V et une composante alternative de sonnerie d'amplitude 2 V, égale par exemple à 96 V, si V=48 V.

On peut obtenir le même résultat, sans utiliser de transformateur, par exemple au moyen du joncteur décrit dans le brevet français No 2406357. A titre d'exemple, on suppose par la suite que le joncteur 1 est du genre décrit dans ce brevet. Pendant la sonnerie, il est alors appliqué sur les deux bornes de commande 4 et 5 du joncteur, en provenance du central 3, des signaux numériques $\Delta_A$ et $\Delta_B$ résultant du codage au moyen de la modulation delta de signaux ayant la même forme que les signaux $V_A$ et $V_B$ de la formule (1). Ces signaux $\Delta_A$ et $\Delta_B$ sont convertis en analogique dans les décodeurs 6 et 7, puis appliqués sur les bornes d'entrée 8 et 9 d'un amplificateur symétrique (ou push-pull) formé des transistors $T_1$ à $T_4$ montés comme l'indique la figure. Les bornes de sortie 10 et 11 de cet amplificateur symétrique sont reliées aux deux fils $L_A$ et $L_B$ de la ligne d'abonné. L'alimentation en courant continu de l'amplificateur symétrique est effectuée par l'intermédiaire des bornes d'alimentaiton 12 et 13 du joncteur, qui sont reliées respectivement aux bornes 14 et 15 d'une source d'alimentation continue non représentée. La borne positive 14 de cette source est portée à la tension $E_o + V$ par rapport à la masse et la borne négative 15 est portée à la tension $-V$ par rapport à la masse. Avec un joncteur 1 commandé et alimenté de cette manière, on obtient finalement, entre les fils $L_A$ et $L_B$ de la ligne d'abonné, la tension $U_S$ définie par la formule (2).

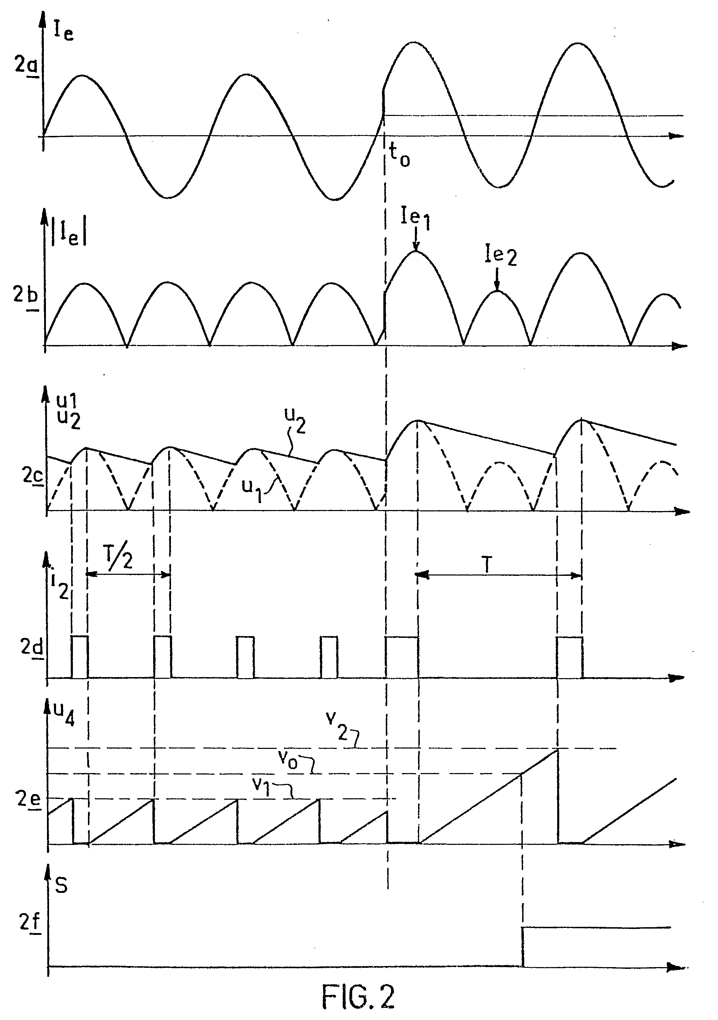

Le dispositif de l'invention, qui est chargé de détecter le bouclage de la ligne d'abonné pendant la sonnerie, est fondé sur les caractéristiques d'un signal de valeur absolue du courant dans la ligne d'abonné, comme on va le montrer à l'aide des diagrammes 2a et 2b de la fig. 2.

Sur le diagramme 2a, on a représenté en fonction du temps le courant $I_e$ dans la ligne d'abonné pendant la sonnerie, c'est-à-dire pendant que l'on applique à cette ligne la tension $U_S$ définie à la formule (2). Comme le montre le diagramme 2a, avant l'instant $t_o$ où se produit le bouclage, le courant $I_e$ a une forme sinusoïdale avec une valeur moyenne nulle, puisque aucun courant continu ne peut circuler dans la ligne d'abonné. Après l'instant $t_o$, le courant $I_e$ a la forme d'une sinusoïde avec une valeur moyenne non nulle à cause du courant continu produit par la tension continue $E_o$. L'amplitude des composantes sinusoïdales du courant $I_e$ avant et après le bouclage n'est d'ailleurs pas la même, puisque l'impédance en alternatif de la ligne d'abonné vue du joncteur est différente dans ces deux cas.

Le diagramme 2b montre le signal $|I_e|$ représentant la valeur absolue du courant $I_e$, et qui peut s'en déduire pratiquement par un redressement en double alternance. On voit que, avant l'instant de bouclage $t_o$, les valeurs de crête successives du signal $|I_e|$ sont égales tandis que, au contraire, après l'instant de bouclage $t_o$, les valeurs de crête successives du signal $|I_e|$ ont alternativement une valeur élevée $I_{e1}$ et une valeur faible $I_{e2}$.

On peut calculer ces valeurs de crête élevée $I_{e1}$ et faible $I_{e2}$. En utilisant les notations de la formule (2) on peut écrire:

$$|I_e| = \left| \frac{2 V \sin \omega t}{Z_{ca}} + \frac{E_o}{Z_{cc}} \right|$$

où $Z_{ca}$ et $Z_{cc}$ sont les impédances de la ligne d'abonné en courant alternatif et en courant continu.

On en déduit aisément:

$$\begin{cases} I_{e1} = \dfrac{2V}{Z_{ca}} + \dfrac{E_o}{Z_{cc}} \\ I_{e2} = \dfrac{2V}{Z_{ca}} - \dfrac{E_o}{Z_{cc}} \end{cases}$$

Avant le bouclage de la ligne, on a $Z_{cc} = \infty$ et donc $I_{e1} = I_{e2}$.

Après le bouclage de la ligne, $Z_{cc}$ a une valeur finie et donc $I_{e1} \neq I_{e2}$, et

$$I_{e1} - I_{e2} = \frac{2E_o}{Z_{cc}}$$

Selon la présente invention, pour détecter le bouclage de la ligne d'abonné pendant la sonnerie, on utilise un signal représentatif de la valeur absolue $|I_e|$ du courant dans la ligne d'abonné et l'on met en évidence par un moyen très simple qu'une différence non nulle $(I_{e1}-I_{e2})$ entre les valeurs crêtes successives de $|I_e|$ existe après le bouclage.

Le dispositif de l'invention comprend donc d'abord des moyens pour former un signal représentatif de la valeur absolue du courant circulant dans la ligne d'abonné. Dans le cas du joncteur 1 représenté à la fig. 1, un tel signal est obtenu presque gratuitement. En effet, pendant que la ligne d'abonné est alimentée par la tension de sonnerie, via l'amplificateur symétrique $T_1$ à $T_4$, il apparaît, sur les fils d'alimentation du joncteur joignant les bornes 14-12 et 15-13, un courant unidirectionnel qui est égal au courant dans la ligne d'abonné ayant subi un redressement en double alternance et qui est donc égal à $|I_e|$. Pour obtenir un courant $k|I_e|$ proportionnel à $|I_e|$, on utilise un circuit bien connu 17, appelé miroir de courant, et qui est inséré entre les bornes 12 et 14. Sous la forme simple représentée, ce miroir de courant est constitué par une diode 18 et un transistor 19 connectés, comme l'indique la figure, à la borne d'alimentation 14, à la borne d'entrée 20 et à la borne de sortie 21 du miroir de courant. Cette borne 21 est connectée à la masse à travers la résistance 22. En réponse au courant $|I_e|$ qui apparaît sur sa borne d'entrée 20, le miroir de courant 17 produit, sur sa borne de sortie 21, un courant $i_1 = k|I_e|$ et, aux bornes de la résistance 22, il apparaît une tension $u_1$ qui est proportionnelle à $|I_e|$.

Cette tension $u_1$ a la même forme que le courant de valeur absolue $|I_e|$ représenté sur le diagramme 2b et possède les mêmes caractéristiques que l'on a expliquées ci-dessus, en ce qui concerne ses valeurs crêtes successives, avant et après le bouclage de la ligne d'abonné.

Cette tension $u_1$ proportionnelle à $|I_e|$ est utilisée dans le circuit 23, comme on va maintenant l'expliquer, pour former un signal logique indiquant le bouclage de la ligne d'abonné.

La tension $u_1$ est appliquée dans un premier étage du circuit 23, sur la base du transistor npn 24. Le collecteur de ce transistor est relié à la borne d'alimentation positive 14 à travers la résistance 25. Son émetteur est relié à la masse à travers le condensateur 26 de capacité C aux bornes duquel est connectée la résistance 27 de valeur ohmique R. Le fonctionnement de ce premier étage va être expliqué au moyen des diagrammes 2c et 2d.

Sur le diagramme 2c, on a représenté par la courbe en pointillé la tension $u_1$ qui a la même forme que le courant $|I_e|$ du diagramme 2b. La courbe en trait plein représente la tension $u_2$ aux bornes du condensateur 26. Comme le condensateur 26 est relié à la résistance 22 à travers la diode base-émetteur du transistor 24, la tension $u_2$ à ses bornes suit la tension $u_1$, pendant une partie des flancs montants de $u_1$, jusqu'aux valeurs de crête de $u_1$. Au-delà de ces valeurs de crête, sur les flancs descendants de $u_1$, le condensateur 26 ne suit plus la tension $u_1$ et se décharge à travers la résistance 27. Les recharges du condensateur 26 sur les flancs montants de $u_1$ se produisent à partir des instants où la tension $u_2$ décroissante devient égale à la tension $u_1$.

Avant l'instant de bouclage $t_0$ de la ligne d'abonné, les valeurs de crête successives de la tension $u_1$ sont égales et il en résulte que, en régime, la durée du cycle de charge et de décharge du condensateur 26 est égale à T/2, T étant la période de la tension de sonnerie. Sur le diagramme 2d, on a représenté le courant de charge $i_2$ du condensateur 26, qui est pratiquement égal au courant de collecteur du transistor 24. Avant l'instant de bouclage $t_0$, ce courant de charge est formé d'impulsions se produisant en régime avec la période T/2.

Après l'instant de bouclage $t_0$, les valeurs de crête successives de la tension $u_1$ sont différentes et, en choisissant une constante de temps de décharge RC du condensateur 26 dans la résistance 27 suffisamment grande, on peut s'arranger, comme le montre clairement le diagramme 2c, pour que la tension $u_2$ décroissante n'atteigne qu'une fois sur deux les flancs montants de la tension $u_1$. Après l'instant de bouclage $t_0$, en régime, la durée du cycle de charge et de décharge du condensateur 26 est égale à T et, comme le montre le diagramme 2d, les impulsions du courant de charge du condensateur 26 se produisent avec la période T. Le choix de la constante de charge RC n'est ni critique, ni difficile à définir; cette constante de temps doit être suffisamment grande pour que, pendant une durée T/2 de décharge du condensateur 26, la baisse de la tension $u_2$ à ses bornes n'atteigne pas la différence $\Delta u_1$ entre deux valeurs crêtes successives de la tension $u_1$. Cette différence $\Delta u_1$ est proportionnelle à la différence des courants de crête $I_{e1}-I_{e2}$, qui, comme on l'a montré ci-dessus, est égale à

$$\frac{2E_o}{Z_{cc}}$$

et donc indépendante de l'amplitude 2 V de la tension de sonnerie appliquée à la ligne d'abonné et de l'impédance $Z2_{ca}$ de cette ligne en courant alternatif. Le dispositif de l'invention détecte le bouclage de la ligne d'abonné en utilisant le changement que produit ce bouclage, dans la période ou dans l'espacement des impulsions du courant de charge $i_2$ du condensateur 26, et il résulte de ce qui précède que ce dispositif n'est, par principe, pas affecté par des variations de ces grandeurs 2 V et $Z_{ca}$.

Dans le mode de réalisation de la fig. 1, les impulsions du courant de charge $i_2$ sont utilisées de la manière suivante. La résistance 25 qui est traversée par le courant $i_2$ est connectée entre la base et l'émetteur du transistor pnp 28. L'émetteur de ce transistor 28 est relié à la borne positive d'alimentation 14 et son collecteur est relié à la masse à travers la résistance 29. Le transistor 28 amplifie le courant $i_2$ et fournit sur son collecteur un courant $i_3$ qui engendre, aux bornes de la résistance 29, une tension $u_3$ qui, à un coefficient de proportionnalité près, a la même forme que le courant de charge $i_2$ montré sur le diagramme 2d.

La résistance 29 est connectée entre la base et l'émetteur du transistor npn 30 qui est commandé pour être bloqué ou saturé par la tension $u_3$. La source de courant 32 formée à partir de la tension continue $u_o$ fournit un courant constant qui charge le condensateur 31 constituant un circuit intégrateur. Le condensateur 31 est connecté par ailleurs entre le collecteur et l'émetteur du transistor 30. De cette manière le condensateur 31 peut se charger à courant constant quand le transistor 30 est bloqué, tandis qu'il se décharge brusquement quand ce transistor 30 est saturé.

Comme le montre le diagramme 2e, il en résulte que la tension $u_4$ aux bornes du condensateur 31 est nulle pendant la durée des impulsions du courant $i_2$ et croît linéairement dans les intervalles de temps entre ces impulsions. La tension maximale atteinte à la fin de chacun de ces intervalles de temps en constitue une mesure. Comme ces intervalles de temps entre les impulsions du courant $i_2$ sont, en régime, plus grands après le bouclage qu'avant le bouclage, la tension $u_4$ aux bornes du condensateur 31 atteint, après le bouclage, une valeur maximale $v_2$ plus élevée que sa valeur maximale $v_1$ avant le bouclage.

Pour détecter le bouclage de la ligne d'abonné, la tension $u_4$ est appliquée à l'entrée d'un circuit à seuil 33 qui compare la tension $u_4$ à une tension de référence $v_o$ comprise entre les tensions $v_1$ et $v_2$. Avant l'instant $t_o$ de bouclage, la tension $u_4$ reste inférieure à $v_o$, et le circuit à seuil 33 fournit à la sortie 34 du dispositif de détection de bouclage un signal S représenté sur le diagramme 2f et ayant la valeur logique O; après l'instant $t_o$ de bouclage, au moment où la tension $u_4$ atteint la tension de référence $v_o$, le signal S prend l'état logique 1, qui indique le bouclage de la ligne d'abonné. On peut vérifier que la détection du bouclage s'effectue dans tous les cas, en moins d'une période T après l'instant de bouclage $t_o$.

L'homme de l'art comprendra aisément que, au lieu d'un intégrateur 31, 32 de type analogique pour mesurer les intervalles de temps entre les impulsions du courant $i_2$, on pourrait utiliser un compteur comptant des impulsions d'horloge pendant ces intervalles de temps et remis à zéro pendant les impulsions du courant $i_2$; le bouclage serait alors détecté quand un seuil de comptage est atteint. Au lieu de mesurer l'intervalle entre les impulsions du courant $i_2$, on pourrait bien entendu mesurer aussi la période de ces impulsions qui, comme on l'a montré, passe de T/2 avant le bouclage à T après le bouclage.

Le dispositif de l'invention peut être utilisé avec un joncteur d'abonné d'un type autre que celui représenté sur la fig. 1, qui n'a été indiqué qu'à titre d'exemple. Il suffit que, avec le joncteur utilisé, la ligne d'abonné soit alimentée pendant la sonnerie par la tension alternative de sonnerie et par une tension continue et que l'on forme à partir du courant dans la ligne d'abonné un signal représentatif de la valeur absolue de ce courant.

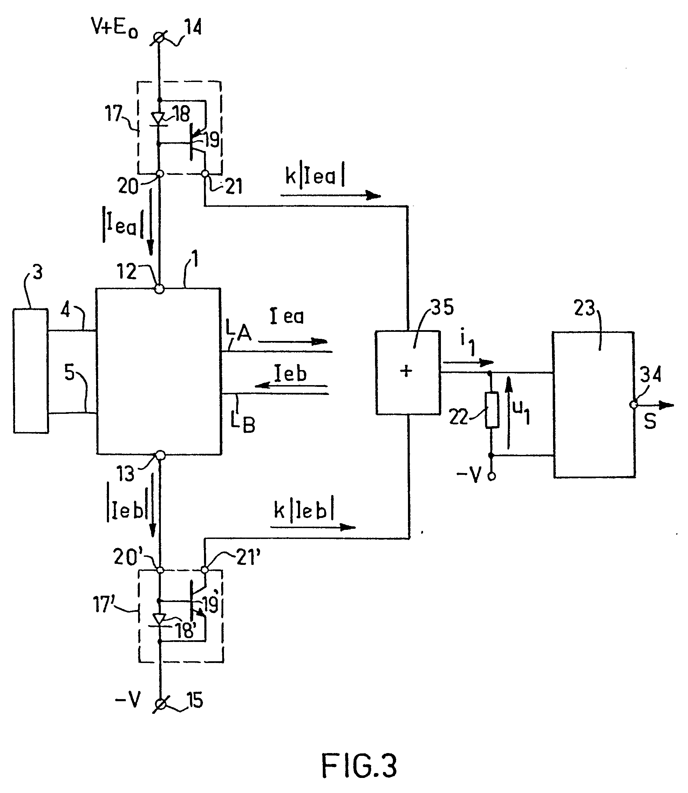

Pour obtenir un dispositif de détection de bouclage insensible aux courants parasites longitudinaux dans la ligne d'abonné, il est avantageux d'utiliser la disposition représentée sur la fig. 3.

Sur cette fig. 3, on utilise un certain nombre d'éléments identiques à ceux de la fig. 1 et référencés de la même manière. Les deux fils $L_A$ et $L_B$ de la ligne d'abonné sont respectivement parcourus par des courants $I_{ea}$ et $I_{eb}$ qui peuvent être différents dans le cas de courants longitudinaux créés intempestivement dans la ligne d'abonné. On suppose, à titre d'exemple, que le joncteur 1 est du même type que celui représenté à la fig. 1. Entre la borne 14 de la source d'alimentation et la borne d'alimentation 12 du joncteur, il circule alors un courant $|I_{ea}|$ résultant du redressement en double alternance du courant $I_{ea}$ et, entre la borne 15 de la source d'alimentation et la borne d'alimentation 13 du joncteur, il circule un courant $|I_{eb}|$ résultant du redressement en double alternance du courant $I_{eb}$. Entre les bornes 13 et 15 est inséré un miroir de courant 17' ayant le même rapport k que le miroir 17 et formé par la diode 18' et le transistor 19'.

En réponse aux courants $|I_{ea}|$ et $|I_{eb}|$ appliqués sur les bornes d'entrée 20 et 20' des miroirs de courant 17 et 17', il apparaît sur leurs bornes de sortie 21 et 21' les courants $k|I_{ea}|$ et $k|I_{eb}|$ qui sont appliqués au circuit d'addition de courants 35. A la sortie de ce dernier, on obtient le courant de somme

$$k[|I_{ea}| + |I_{eb}|].$$

Dans ce courant de somme, les composantes de courants longitudinaux sont supprimées. On peut donc identifier ce courant de somme au courant $i_1$ qui, sur la fig. 1, circule à travers la résistance 22. Sur la fig. 3, la résistance 22 reçoit la tension $-V$. La tension $u_1$ aux bornes de la résistance 22 est appliquée au circuit 23 qui peut être identique et a la même fonction que celui de la fig. 1. A sa sortie 34, on obtient un signal logique S indiquant le bouclage de la ligne d'abonné, sans être influencé par les courants longitudinaux dans la ligne d'abonné.

## Revendications

1. Dispositif de détection du bouclage d'une ligne téléphonique d'abonné ($L_A$, $L_B$) pendant la durée de la sonnerie, cette ligne étant alimentée pendant cette durée par la tension alternative de sonnerie et une tension continue, caractérisé en ce qu'il comporte des moyens (17, 22) pour former une tension ($u_1$) représentative de la valeur absolue du courant ($I_e$) dans la ligne d'abonné, cette tension ($u_1$) étant appliquée, *via* un élément unidirectionnel (24), à un condensateur (26) shunté par une impédance (27) de façon que, avant le bouclage de la ligne d'abonné, le condensateur (26) se charge jusqu'à la valeur de crête de ladite tension ($u_1$) à chaque demi-période (T/2) de la tension alternative de sonnerie, la constante de temps de décharge du condensateur (26) étant déterminée de façon que, après le bouclage de la ligne d'abonné, la baisse de tension aux bornes du condensateur (26) n'atteigne pas, pendant une durée de décharge égale à une demi-période (T/2) de la tension alternative de sonnerie, la différence entre deux valeurs crêtes successives de ladite tension ($u_1$) représentative

de la valeur absolue du courant ($I_e$) dans la ligne d'abonné, la détection du bouclage de la ligne d'abonné étant réalisée en détectant le changement que produit ce bouclage dans la période ou l'espacement des impulsions de courant de charge ($i_2$) du condensateur (26).

2. Dispositif selon la revendication 1, caractérisé en ce qu'il comporte un circuit de combinaison (35) qui combine deux signaux représentatifs de la valeur absolue des courants ($I_{ea}$, $I_{eb}$) circulant dans les deux fils ($L_A$, $L_B$) de la ligne d'abonné de façon à supprimer dans le signal de combinaison ($i_1$) les composantes de courant longitudinal, ce signal de combinaison ($i_1$) servant à former ladite tension ($u_1$) qui est appliquée, *via* un élément unidirectionnel (24), audit condensateur (26) shunté par une impédance (27).

3. Dispositif selon l'une des revendications 1 ou 2, caractérisé en ce qu'il comporte des moyens (30, 31, 32) pour mesurer la durée de chaque intervalle de temps entre les impulsions du courant de charge ($i_2$) dudit condensateur (26) et un dispositif à seuil (33) pour indiquer le bouclage de la ligne d'abonné quand cette durée dépasse un certain seuil ($V_o$).

4. Dispositif selon l'une des revendications 1 ou 2, caractérisé en ce qu'il comporte des moyens pour mesurer la durée de chaque période des impulsions du courant de charge dudit condensateur et un dispositif à seuil pour indiquer le bouclage de la ligne d'abonné quand cette durée dépasse un certain seuil.

## Patentansprüche

1. Vorrichtung zum Erkennen des Schleifenschlusses einer Teilnehmerleitung ($L_A$, $L_B$) während des Rufens wobei diese Leitung während dieser Periode mit einer Rufwechselspannung und einer Gleichspannung gespeist wird, dadurch gekennzeichnet, dass diese Vorrichtung Mittel (17, 22) enthält zum Bilden einer Spannung ($u_1$), die dem Absolutbetrag des Stromes ($I_e$) in der Teilnehmerleitung entspricht, wobei diese Spannung ($u_1$) an einem einseitig gerichteten Element (24) und einem Kondensator (26) anliegt, dem eine Impedanz (27) derart parallel geschaltet ist, dass bevor die Teilnehmerleitung ($L_A$, $L_B$) geschlossen wird, sich der Kondensator (26) bis zum Spitzenwert der Spannung ($u_1$) während jeder halben Periode (T/2) der Rufwechselspannung auflädt, dass die Entladezeitkonstante des Kondensators (26) derart bemessen ist, dass nach dem Schliessen der Teilnehmerleitung ($L_A$, $L_B$) das Absinken der Spannung an den Anschlussen des Kondensators (26) während einer Entladeperiode, welche einer halben Periode (T/2) der Rufwechselspannung entspricht, die Differenz zwischen zwei aufeinanderfolgenden Spitzenwerten der Spannung ($u_1$), die dem Absolutbetrag des Stromes ($I_e$) in der Teilnehmerleitung entspricht, nicht erreicht, und dass die Detektion des Schleifenschlusses der Teilnehmerleitung ($L_A$, $L_B$), durch Detektion der Änderung, die durch diese Schleifenschliessung in der Periodendauer oder in der Pausendauer eines impulsförmigen Ladestromes ($i_2$) des Kondensators (26) verursacht wird, erfolgt.

2. Vorrichtung nach Anspruch 1, dadurch gekennzeichnet, dass diese Vorrichtung eine Kombinationsschaltung (35) enthält, die zwei Signale miteinander verknüpft, welche für den Absolutwert der Ströme ($I_{ea}$, $I_{eb}$), in den zwei Drähten ($L_a$, $L_B$) der Teilnehmerleitung repräsentativ sind, um die Längsstromanteile in dem kombinierten Signal ($i_1$) zu unterdrücken, wobei dieses kombinierte Signal ($i_1$) zur Bildung der Spannung ($u_1$) verwendet wird, die über dem einseitig gerichteten Element (24) und dem Kondensator (26) anliegt, dem die Impedanz (27) parallel geschaltet ist.

3. Vorrichtung nach einem der beiden Ansprüche 1 oder 2, dadurch gekennzeichnet, dass diese Vorrichtung Mittel (30, 31, 32) enthält zum Messen der Pausendauer des impulstörmigen Ladestroms ($i_2$) des Kondensators (26) und eine Schwellenanordnung (33) enthält zum Erkennen des Schleifenschlusses der Teilnehmerleitung ($L_A$, $L_B$), wenn diese Pausendauer eine vorbestimmte Schwelle ($V_o$) überschreitet.

4. Vorrichtung nach einem der beiden Ansprüche 1 oder 2, dadurch gekennzeichnet, dass diese Vorrichtung Mittel enthält zum Messen der Periodendauer des impulsförmigen Ladestromes ($i_2$) für den Kondensator (26) und eine Schwellenanordnung enthält zum Erkennen des Schleifenschlusses der Teilnehmerleitung ($L_a$, $L_B$), wenn diese Periodendauer eine vorbestimmte Schwelle überschreitet.

## Claims

1. A device for detecting the closure of a subscriber telephone line ($L_A$, $L_B$) during the ringing period, this line being fed during this period with an a.c. ringing voltage and a d.c. voltage, characterized in that it comprises means (17, 22) for forming a voltage ($u_1$) which is representative of the absolute value of the current ($I_e$) in the subscriber line, this voltage being applied via an unidirectional component (24) to a capacitor (26) which is shunted by an impedance (27) such that, before closing of the line, the capacitor (26) is charged to the peak value of the said voltage ($u_1$) at each half-period (T/2) of the a.c. ringing voltage, the discharge time constant of the capacitor (26) being determined such that after closing of the subscriber line the voltage decrease at the terminals of the capacitor (26), during a discharging period equal to half a period (T/2) of the a.c. ringing voltage, is less than the difference between two consecutive peak values of the said voltage ($u_1$) which is representative of the absolute value of the current ($I_e$) in the subscriber line, the detection that the subscriber line is closed being effected by detecting the change produced by this loop closure in the period or the spacing of the pulses of the charging current ($i_2$) of the capacitor (26).

2. A device as claimed in claim 1, characterized in that it comprises a combining circuit (35) which combines two signals which are representative of the absolute value of the currents ($I_{ea}$, $I_{eb}$) circulating in the two wires ($L_A$, $L_B$) of the subscriber line in order to suppress the longitudinal current components in the combined signal ($i_1$), this combined signal ($i_1$) being the signal used to form the said voltage ($u_1$) which is applied, via an unidirectional component (24), to the said capacitor (26) which is shunted by an impedance (27).

3. A device as claimed in claim 1 or 2, characterized in that it comprises means (30, 31, 32) for measuring the duration of each time interval between the charging current pulses ($i_2$) of the said capacitor (26) and a threshold device (33) for indicating closure of the subscriber line when this time period exceeds a predetermined threshold ($V_o$).

4. A device as claimed in claim 1 or 2, characterized in that it comprises means for measuring the duration of each period of the pulses of the charging current for the said capacitor and a threshold device to indicate closure of the subscriber line when this period exceeds a predetermined threshold.

FIG.1

0 029 627

FIG.2

11

FIG.3